# EUROPEAN PATENT APPLICATION

(11) **EP 2 634 911 A2**
(43) Date of publication of application: **04.09.2013**
(21) Application number: 13157051.7
(22) Date of filing: 27.02.2013
(51) Int. Cl.: H02P 8/00

(54) **Reset-to-zero and return processing method and device for stepping motor**

(30) Priority: 29.02.2012 JP 2012044104
(71) Applicant: Calsonic Kansei Corporation, Saitama-shi Saitama 331-8501 (JP)
(72) Inventor: Muraki, Ryosuke, Saitama 331-8501 (JP)
(74) Representative: Oxley, Robin John George

(57) **Abstract**

A movable member is movable in a movable range in response to a command issued to a stepping motor such that a given position of the movable member or a given angle of the movable member is changed. An operating method and/or apparatus may select a stopper member origin position from among a plurality of stopper member positions based on which of the plurality of stopper member positions is closer to a first position or a first angle of the movable member that has been calculated based at least in part on a command issued to the stepping motor; perform reset-to-zero processing by moving the movable member into a second position or a second angle relative to the stopper member origin position; and performing return processing by moving the movable member from the second position or the second angle to the first position or the first angle that has been calculated based at least in part on the command issued to the stepping motor before performing said reset-to-zero processing.

## Description

### BACKGROUND

The present invention relates to a reset-to-zero and return processing method and a reset-to-zero and return processing device for a stepping motor used, for example, to open and close an intake door of a vehicle air-conditioning apparatus.

A stepping motor is typically an actuator having a shaft that can be rotated by an angle corresponding to a pulse number input from the outside, and is widely used to rotate a pointer of a speed meter requiring high responsiveness, such as a vehicle measuring instrument, to open and close an intake door of a vehicle air-conditioning apparatus requiring low speed and high torque, and so on.

A stepping motor is operated by open loop control, and therefore, although a rotation angle can be indicated by the pulse number input into the stepping motor, positional deviation may occur in a movable member driven by the stepping motor due to an unforeseen load applied from the outside so as to inhibit movement of the movable member. Further, loss of synchronism may occur in the stepping motor due to vibration of an apparatus installed with the stepping motor, and this loss of synchronism may cause positional deviation in the movable member. It is therefore difficult to know the angle by which the stepping motor actually rotates from the pulse number input into the stepping motor. Hence, when the stepping motor is used over a long period, a rotation angle error may accumulate, and as a result of this error, the stepping motor may become unable to perform its predetermined operation.

Therefore, in a proposed invention (see Japanese Patent Application Publication No. S58-121412), processing (to be referred to hereafter as "reset-to-zero processing") is performed periodically to rotate the stepping motor to a predetermined origin position so that the rotation angle of the stepping motor is aligned with the origin position. When the reset-to-zero processing is complete, processing (to be referred to hereafter as "return processing") is performed to rotate the stepping motor in an opposite direction so that the stepping motor returns to an original set position in preparation for subsequent use.

According to the invention described in Japanese Patent Application Publication No. S58-121412, however, when the reset-to-zero processing is performed, a movable member such as a door driven by the stepping motor must be moved to a preset origin position by rotating the stepping motor. For example, when the reset-to-zero processing and the return processing are executed on a stepping motor that drives an intake door of a vehicle air-conditioning apparatus, first, the intake door must be moved to a predetermined origin position by performing the reset-to-zero processing, and then the intake door must be returned to its original position by performing the return processing in order to return the air-conditioning apparatus to its original set condition. The intake door is heavy, and therefore a long time is needed to move the intake door at this time. In a typical vehicle air-conditioning apparatus, it may take over ten seconds to perform the reset-to-zero and return processing.

Hence, a long time is needed to move the intake door by performing the reset-to-zero processing and the return processing, and during implementation of the reset-to-zero processing and the return processing, air being blown by the vehicle air-conditioning apparatus must be stopped. Therefore, during implementation of the reset-to-zero processing and the return processing, a function of the vehicle air-conditioning apparatus is impaired, and as a result, a passenger may experience discomfort.

### SUMMARY

The present invention has been designed in consideration of the circumstances described above, and an object thereof is to provide an operating method involving a stepping motor having reset-to-zero and return processing and an apparatus for controlling a movable member having reset-to-zero and return processing for a stepping motor, with which reset-to-zero processing and return processing can be executed in a short time.

In a reset-to-zero processing and return processing method for a stepping motor according to an embodiment of the present invention, reset-to-zero processing is performed by setting origin positions at respective end portions of a movable range of a movable member driven by a stepping motor and moving the movable member driven by the stepping motor to an origin position on a side close to an origin setting condition (that is, to an origin position that is closer to the original setting condition than another origin position), whereupon return processing is performed to return the movable member to the original setting condition.

More specifically, an operating method involving a stepping motor according to one embodiment of the present invention, wherein a movable member is movable in a movable range in response to a command issued to the stepping motor such that a given position of the movable member or a given angle of the movable member is changed, may include: selecting a stopper member origin position from among a plurality of stopper member positions based on which of the plurality of stopper member positions is closer to a first position or a first angle of the movable member that has been calculated based at least in part on a command issued to the stepping motor; performing reset-to-zero processing by moving the movable member into a second position or a second angle relative to the stopper member origin position; and performing return processing by moving the movable member from the second position or the second angle to the first position or the first angle that has been calculated based at least in part on the command issued to the stepping motor before performing said reset-to-zero processing.

A reset-to-zero and return processing method for a stepping motor according to another embodiment of the present invention may include: selecting a position of a stopper member, from among stopper members provided at respective end portions of a movable range of a movable member that moves in response to a command issued to a stepping motor such that a position or an angle thereof is modified, on a side close to the position or the angle of the movable member obtained as a result of the command issued to the stepping motor as an origin position; performing reset-to-zero processing by bringing the movable member into contact with the stopper member selected as the origin position; and performing return processing following completion of the reset-to-zero processing by modifying the position or the angle of the movable member to a position or an angle of the movable member obtained as a result of a command issued to the stepping motor before performing the reset-to-zero processing.

According to the reset-to-zero and return processing method for a stepping motor thus configured, the position of the stopper member, from among the stopper members provided at the respective end portions of the movable range of the movable member that moves in response to a command issued to the stepping motor such that the position or the angle thereof is modified, on the side close to the position or the angle of the movable member obtained as a result of the command issued to the stepping motor is selected as the origin position (that is, a stopper member position that is closer to the position or angle of the movable member that has been calculated based at least in part on a command issued to the stepping motor is selected as a stopper member origin position), the reset-to-zero processing is performed by bringing the movable member into contact with the stopper member selected as the origin position, and the return processing is performed following completion of the reset-to-zero processing by modifying the position or the angle of the movable member to the position or the angle of the movable member obtained as a result of a command issued to the stepping motor before performing the reset-to-zero processing. Hence, the movable member need only move to and from the position of the stopper member provided on the closer side of the respective end portions of the movable range, and therefore the time required for the reset-to-zero processing and the return processing can be shortened.

Further, in the reset-to-zero and return processing method for a stepping motor according to another embodiment of the present invention, the reset-to-zero processing may be performed when a main power supply of an apparatus installed with the stepping motor is interrupted, and/or the return processing may be performed when the main power supply is reintroduced after the interruption.

According to the reset-to-zero and return processing method for a stepping motor thus configured, the reset-to-zero processing is performed when the power supply of the apparatus installed with the stepping motor is interrupted, and the return processing is performed when the power supply of the apparatus is reintroduced after the interruption. Hence, the reset-to-zero processing is performed when use of the apparatus is terminated, and the return processing is performed when the apparatus is activated. As a result, a user can use the apparatus without experiencing a loss of function in the apparatus during execution of the reset-to-zero processing and the return processing.

Furthermore, according to the reset-to-zero and return processing method for a stepping motor thus configured, the reset-to-zero processing is performed when the power supply is interrupted and the return processing is performed when the power supply is introduced, and therefore respective periods during which the reset-to-zero processing and the return processing are performed can be completely separated. As a result, the time required for the reset-to-zero and return processing can be shortened even further in comparison with a case where the reset-to-zero processing and the return processing are performed consecutively.

An apparatus for controlling a movable member according to another embodiment of the present invention may include: a stepping motor driving controller configured to drive a stepping motor by issuing a command indicating a movement amount or a rotation amount of the movable member to the stepping motor; a movable member position storage unit configured to store a first position or a first angle of the movable member that has been calculated based at least in part on a command issued from the stepping motor driving controller; an origin selector configured to select a stopper member origin position from among a plurality of stopper member positions based on which of the plurality of stopper member positions is closer to the first position or the first angle of the movable member that has been calculated based at least in part on the command issued from the stepping motor driving controller; and a reset-to-zero and return processing controller. The reset-to-zero and return processing controller is configured to: perform reset-to-zero processing for moving the movable member into a second position or a second angle relative to the stopper member origin position, and perform return processing for returning the movable member from the second position or the second angle to the first position or the first angle that has been calculated based at least in part on the command issued from the stepping motor driving controller prior to said reset-to-zero processing.

An apparatus for controlling a movable member having reset-to-zero and return processing according to another embodiment of the present invention may include: a stepping motor; a movable member that moves in response to rotation of the stepping motor such that a position or an angle thereof is modified; a stepping motor driving control unit that drives the stepping motor by issuing a command indicating a movement amount or a rotation amount of the movable member to the stepping motor; stopper members provided at respective end portions of a movement range or a rotation range of the movable member in order to restrict movement or rotation of the movable member; a movable member position storage unit that stores a position or an angle of the movable member estimated on the basis of a command from the stepping motor driving control unit; an origin selection unit that selects a position of a stopper member on a side close to the position or the angle of the movable member, from among the stopper members, as an origin position (that is, selects a stopper member origin position based on which the plurality of stopper member positions is closer to the position or angle of the movable member that has been estimated or calculated based at least in part on a command issued to the stepping motor) on the basis of the position or the angle of the movable member stored in the movable member position storage unit; and a reset-to-zero and return processing control unit that performs reset-to-zero processing for bringing the movable member into contact with the origin position and, following completion of the reset-to-zero processing, performs return processing for returning the movable member to a position thereof prior to the reset-to-zero processing.

According to the apparatus for controlling a movable member thus configured, the origin selection unit selects the position of the stopper member, from among the stopper members provided at the respective end portions of the movable range of the movable member that moves in response to rotation of the stepping motor corresponding to a command issued from the stepping motor driving control unit such that the position or the angle thereof is modified, on the side close to the position or the angle of the movable member as an origin on the basis of the position or the angle of the movable member stored in the movable member position storage unit, whereupon the reset-to-zero and return processing control unit performs the reset-to-zero processing using the position of the selected stopper member as an origin position by bringing the movable member into contact with the selected stopper member, and performs the return processing following completion of the reset-to-zero processing by modifying the position or the angle of the movable member to the position or the angle thereof prior to the reset-to-zero processing. Hence, the movable member need only move to and from the position of the stopper member provided on the closer side of the respective end portions of the movable range. Therefore a reset-to-zero and return processing device for a stepping motor can be provided with which the time required for the reset-to-zero processing and the return processing is shortened.

Further, the apparatus for controlling a movable member according to another embodiment of the present invention, may further include a power supply instruction unit that introduces and interrupts a main power supply of an apparatus installed with the stepping motor, wherein the reset-to-zero processing is performed when the main power is interrupted and/or the return processing is performer when the main power supply is reintroduced after the interruption.

According to the apparatus for controlling a movable member thus configured, the reset-to-zero processing is performed when the power supply instruction unit interrupts the main power supply of the apparatus installed with the stepping motor, and the return processing is performed when the power supply instruction unit introduces the main power supply of the apparatus. Therefore, the reset-to-zero processing and the return processing can be performed in a period where the apparatus is not in use, and as a result, a reset-to-zero and return processing device for a stepping motor can be provided with which a loss of function does not occur in the apparatus during execution of the reset-to-zero processing and the return processing.

Furthermore, according to the apparatus for controlling a movable member thus configured, the reset-to-zero processing is performed when the main power supply is interrupted and the return processing is performed when the main power supply is introduced, and therefore respective periods during which the reset-to-zero processing and the return processing are performed can be completely separated. As a result, a reset-to-zero and return processing device for a stepping motor can be provided with which the time required for a single processing operation can be shortened even further in comparison with a case where the reset-to-zero processing and the return processing are performed consecutively.

According to a further embodiment of the present invention, a processing apparatus for a stepping motor, may include: an origin selector configured to select an origin position from among a plurality of stopper member positions based on which of the plurality of stopper member positions is closer to a calculated position of a movable member; and a reset-to-zero and return processing controller configured to periodically perform reset-to-zero processing by issuing a command such that a stepping motor moves the movable member to a zeroing (second) position or the zeroing (second) angle in contact with a stopper member at the origin position, and configured to perform return processing by issuing a command such that a stepping motor moves the movable member from the zeroing position to the calculated position that was determined before the reset-to-zero processing.

With the operating methods and apparatuses according to embodiments of the present invention, reset-to-zero processing and return processing may be performed after selecting a position of a stopper member on a side close to a movable member that moves in response to a command issued to a stepping motor, from among stopper members provided at respective end portions of a movable range of the movable member, as an origin position, and therefore the reset-to-zero processing and the return processing can be executed in a short time.

It is to be understood that both the foregoing general description and the following detailed descriptions are exemplary and explanatory only, and are not restrictive of the invention as claimed.

### BRIEF DESCRIPTION OF THE DRAWINGS

These and other features, aspects, and advantages of the present invention will become apparent from the following description, appended claims, and the accompanying exemplary embodiments shown in the drawings, which are briefly described below.

Fig. 1 is a block diagram showing a schematic configuration of a vehicle air-conditioning apparatus according to an embodiment the present invention.

Fig. 2 is a schematic diagram showing the periphery of a vent door in order to illustrate a reset-to-zero and return processing method for a stepping motor according to one embodiment of the present invention.

Fig. 3 is a flowchart illustrating an operation of the reset-to-zero and return processing method for a stepping motor according to the embodiment of the present invention used in Fig. 2.

Fig. 4 is a schematic diagram showing the periphery of a vent door in order to illustrate a reset-to-zero and return processing method for a stepping motor according to another embodiment of the present invention.

Fig. 5A is a view illustrating reset-to-zero processing executed on a stepping motor according to the embodiment of the present invention used in Fig. 4.

Fig. 5B is a view illustrating return processing executed on the stepping motor according to the embodiment of the present invention used in Fig. 4.

Fig. 6 is a flowchart illustrating an operation of the reset-to-zero and return processing method for a stepping motor according to the embodiment of the present invention used in Fig. 4.

Fig. 7 is a view showing a door structure of a vehicle air-conditioning apparatus according to an embodiment of the present invention.

### DETAILED DESCRIPTION

Reset-to-zero processing and return processing methods and reset-to-zero processing and return processing devices for a stepping motor according to embodiments of the present invention will be described below with reference to the drawings.

[First Embodiment]

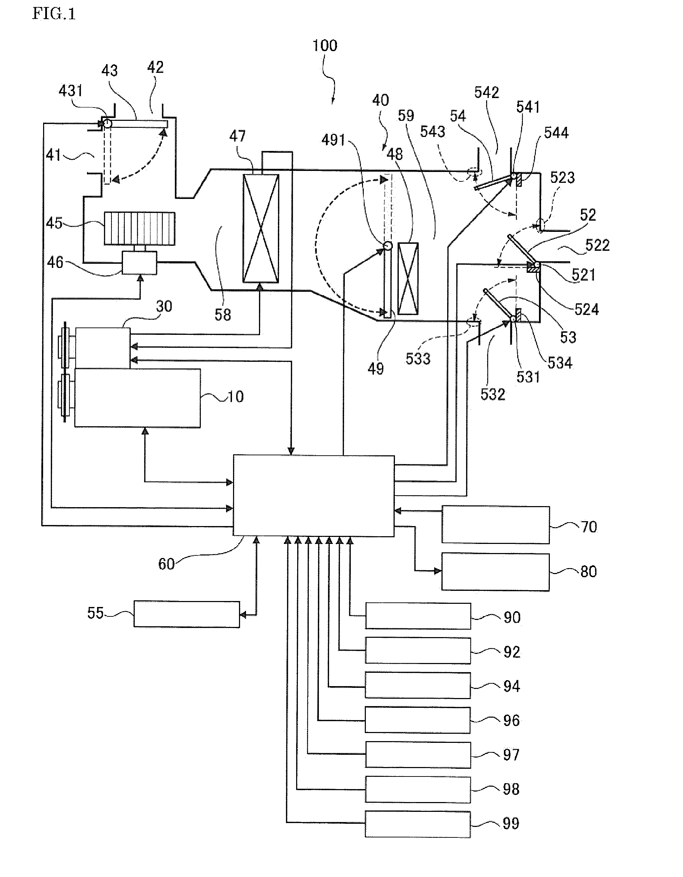

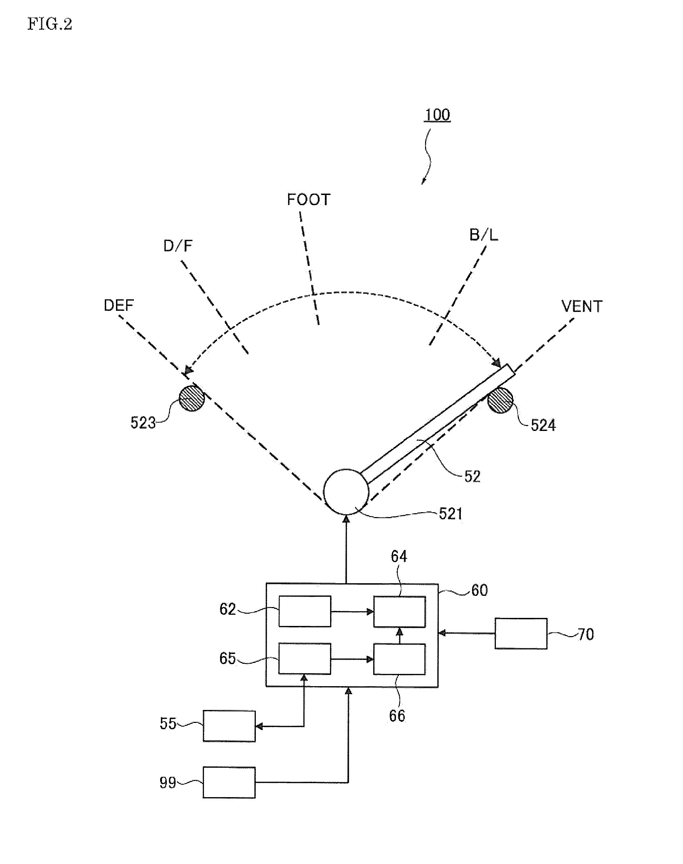

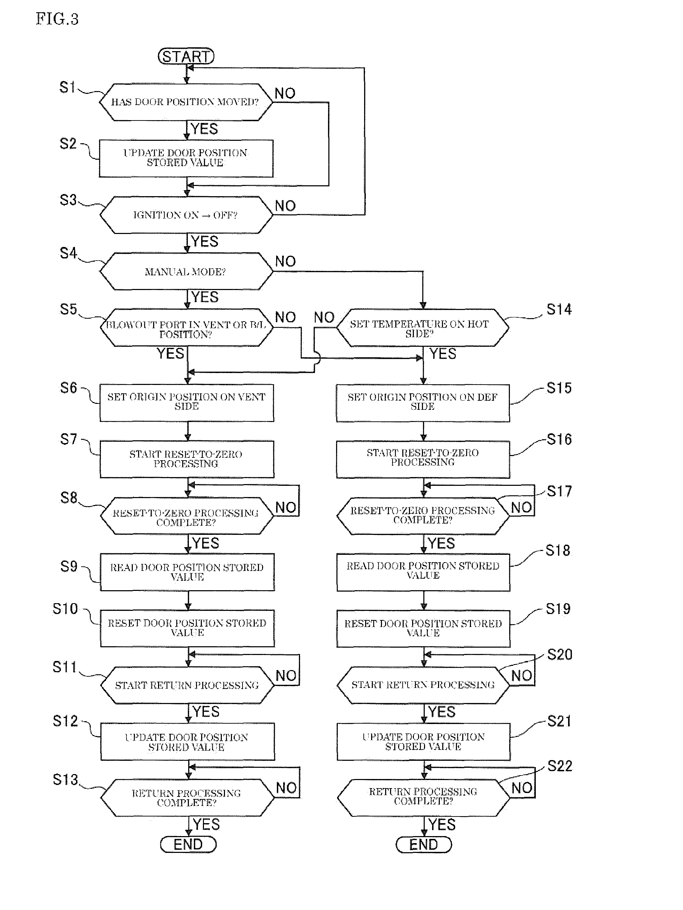

In a first embodiment of the present invention, a vent door, a foot door, and a defroster door of a vehicle air-conditioning apparatus may be controlled. The first embodiment of the present invention will be described below using Figs. 1 and 2 and a flowchart in Fig. 3.

[Mechanical configuration]

A vehicle air-conditioning apparatus is disposed in a vehicle (not shown). As shown in Fig. 1, the vehicle air-conditioning apparatus may include a compressor 30 driven by an engine 10, and an air-conditioning unit 40.

The compressor 30 may pressurize a coolant when driven by the engine 10, the engine generating a driving force in order to cause the vehicle to travel.

The air-conditioning unit 40 may be disposed in a cabin to control an air-conditioning condition in the cabin. The air-conditioning unit 40 may include an outside air introduction port 41, an inside air introduction port 42, an intake door 43, an intake door driving unit 431, a blower fan 45, a blower motor 46, an evaporator 47, a heater core (such as, an air heating heat exchanger) 48, an air mixing door 49, and an air mixing door driving unit 491, which are disposed along an air flow path. Functions of each part will be described below.

The outside air introduction port 41 may introduce air from outside of the vehicle, and the inside air introduction port 42 introduces air from the cabin interior.

The intake door 43 may be rotated by the intake door driving unit 431 to switch between inside air introduction and outside air introduction and to determine a mixing ratio between the inside air and the outside air.

The blower fan 45 may blow outside air, inside air, or a mixture thereof introduced through the intake door 43 into an air duct 58 provided in the interior of the air-conditioning unit 40.

The blower motor 46 may be an actuator such as a DC motor, and controls an amount of air blown into the air duct 58 by controlling a rotation speed (that is, a fan speed) of the blower fan 45.

The coolant pressurized by the compressor 30 may be passed through the evaporator 47 and is evaporated thereby. At this time, the evaporator 47 acts as a cooling heat exchanger that cools the air blown into the evaporator 47.

The heater core (such as, an air heating heat exchanger) 48 may warm the air blown into the heater core 48 by circulating cooling water that has been warmed after the cooling water has passed through a cooling water passage (not shown) in order to cool the engine 10.

The air mixing door 49 may be disposed between the evaporator 47 and the heater core 48, and is driven by the air mixing door driving unit 491 such that an opening of the air mixing door is modified. Thus, the air mixing door 49 may control a mixing ratio between the cold air that has passed only through the evaporator 47 and the warm air that has passed through the heater core 48 after passing through the evaporator 47.

A mixing chamber 59 is formed downstream of the heater core 48. The cool air that has passed through the evaporator 47 is intermixed with the warm air that has passed through the heater core 48 in the mixing chamber 59.

A vent blowout port 522 that communicates with a vent grill (not shown) in the cabin interior, a foot blowout port 532 that communicates with a foot grill (not shown), and a defroster blowout port 542 that communicates with a defroster grill (not shown) are provided in the mixing chamber 59.

An opening of the vent door 52 (a door that permits airflow through a channel) can be modified by rotating the vent door 52 (which may be considered to be a movable member) using the vent door driving unit 521 (which may be a stepping motor). As a result, the air mixed in the mixing chamber 59 is blown toward the vent grill in the cabin interior through the vent blowout port 522.

An opening of the foot door 53 (a door that permits airflow through a channel) can be modified by rotating the foot door 53 (which may be considered to be a movable member) using the foot door driving unit 531 (which may be a stepping motor). As a result, the air mixed in the mixing chamber 59 is blown toward the foot grill in the cabin interior through the foot blowout port 532.

An opening of the defroster door 54 (a door that permits airflow through a channel) can be modified by rotating the defroster door 54 (which may be considered to be a movable member) using the defroster door driving unit 541 (which may be a stepping motor). As a result, the air mixed in the mixing chamber 59 is blown toward the defroster grill in the cabin interior through the defroster blowout port 542.

A vent door first rotation restricting unit 523 (which may be a stopper member) and a vent door second rotation restricting unit 524 (which may be a stopper member) are provided at respective end portions of a rotation range of the vent door 52 as, for example, either parts of an inner wall surface of the mixing chamber 59 or structures projecting from the inner wall surface. When the vent door 52 contacts the vent door first rotation restricting unit 523 or the vent door second rotation restricting unit 524, rotation of the vent door 52 is restricted.

Further, a foot door first rotation restricting unit 533 (which may be a stopper member) and a foot door second rotation restricting unit 534 (which may be a stopper member) are provided at respective end portions of a rotation range of the foot door 53 as, for example, either parts of the inner wall surface of the mixing chamber 59 or structures projecting from the inner wall surface. When the foot door 53 contacts the foot door first rotation restricting unit 533 or the foot door second rotation restricting unit 534, rotation of the foot door 53 is restricted.

Furthermore, a defroster door first rotation restricting unit 543 (which may be a stopper member) and a defroster door second rotation restricting unit 544 (which may be a stopper member) are provided at respective end portions of a rotation range of the defroster door 54 as, for example, either parts of the inner wall surface of the mixing chamber 59 or structures projecting from the inner wall surface. When the defroster door 54 contacts the defroster door first rotation restricting unit 543 or the defroster door second rotation restricting unit 544, rotation of the defroster door 54 is restricted.

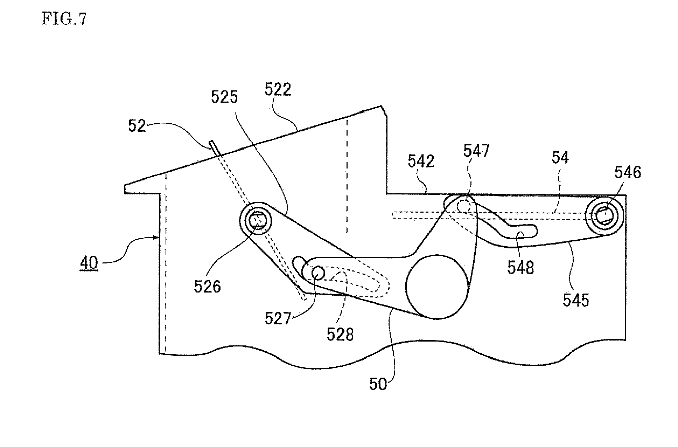

Note that Fig. 7 shows an example of a specific structure of the vent door 52 and the defroster door 54 according to one embodiment of the present invention. The vent door 52, the foot door 53, and the defroster door 54 may be structured to rotate independently of each other, as shown in Fig. 1, or configured such that a plurality of doors rotate in a coordinated fashion, as shown in Fig. 7.

In the configuration shown in Fig. 7, the vent door 52 and the defroster door 54 are structured to rotate in conjunction via a vent door lever 525, an L-shaped link 50, and a defroster door lever 545. The vent door 52 and the vent door lever 525 are connected to each other at a vent door shaft end portion 526, while the defroster door 54 and the defroster door lever 545 are connected to each other at a defroster door shaft end portion 546.

The vent door lever 525 and the L-shaped link 50 that rotate the vent door 52 are coupled to each other via a first pin 527 fitted into a first pin groove 528, while the L-shaped link 50 and the defroster door lever 545 are coupled to each other via a second pin 547 fitted into a second pin groove 548.

[Control configuration]

The vehicle air-conditioning apparatus 100 may further include an air-conditioning control unit 60 (an air-conditioning controller) that controls the air-conditioning unit 40 (an air-conditioner), an air-conditioning operation unit 70 (an air-conditioning operator) that issues operating instructions to the air-conditioning control unit 60, an air-conditioning display unit 80 that displays a control condition of the air-conditioning control unit 60, sensors used by the air-conditioning control unit 60 to calculate control amounts, an ignition signal detection unit 99 (which may be a power supply instruction unit (power supply instructor)) that detects a condition of an ignition switch of the vehicle, and a door position storage unit 55 (which may be a movable member position storage unit) that stores instructed openings issued by the air-conditioning control unit 60 in relation to the vent door 52, the foot door 53, and the defroster door 54. The sensors used by the air-conditioning control unit 60 to calculate control amounts may include an outside air temperature sensor 90, a cabin temperature sensor 92, a blowout port temperature sensor 94, a solar radiation amount sensor 96, a water temperature sensor 97, and an evaporator temperature sensor 98.

A passenger of the vehicle may issue an instruction indicating a set temperature of the cabin interior using the air-conditioning operation unit 70, which may include various switches. The instructed set temperature may be input into the air-conditioning control unit 60.

The outside air temperature sensor 90 measures an outside air temperature. The measured outside air temperature may be input into the air-conditioning control unit 60.

The cabin temperature sensor 92 measures a cabin temperature. The measured cabin temperature may be input into the air-conditioning control unit 60.

The blowout port temperature sensor 94 measures respective temperatures of the vent blowout port 522, the foot blowout port 532, and the defroster blowout port 542. The measured temperatures of the vent blowout port 522, the foot blowout port 532, and the defroster blowout port 542 may be input respectively into the air-conditioning control unit 60.

The solar radiation amount sensor 96 measures an amount of solar radiation impinging on the vehicle. The measured solar radiation amount may be input into the air-conditioning control unit 60.

The water temperature sensor 97 measures a cooling water temperature of the engine 10. The measured water temperature may be input into the air-conditioning control unit 60.

The evaporator temperature sensor 98 measures a temperature of the air that has passed through the evaporator 47. The measured temperature of the air that has passed through the evaporator 47 may be input into the air-conditioning control unit 60.

As shown in detail in Fig. 2, the air-conditioning control unit 60 may comprise a control amount calculation unit 62 (control amount calculator), a stepping motor driving control unit 64 (a stepping motor driving controller), an origin selection unit 65 (an original selector), and a reset-to-zero and return processing control unit 66 (a reset-to-zero and return processing controller).

The control amount calculation unit 62 may determine the rotation speed (that is, the fan speed) of the blower fan 45, an operating condition of the compressor 30, and the respective openings of the intake door 43, the air mixing door 49, the vent door 52, the foot door 53, and the defroster door 54.

The stepping motor driving control unit 64 may control the openings of the respective doors.

The origin selection unit 65 may select, as origin positions, positions of the vent door first rotation restricting unit 523, the foot door first rotation restricting unit 533, and the defroster door first rotation restricting unit 543 or positions of the vent door second rotation restricting unit 524, the foot door second rotation restricting unit 534, and the defroster door second rotation restricting unit 544, that is, positions of the stopper members on a side close to the respective openings of the vent door 52, the foot door 53, and the defroster door 54, in which the vent, foot, and defroster doors may serve as movable members. In other words, the origin selection unit (origin selector) 65 may select a stopper member origin position from among a plurality of stopper member positions based on which of the plurality of stopper member positions is closer to a position or an angle of the respective door that has been calculated based at least in part on a command issued to the stepping motor.

The reset-to-zero and return processing control unit 66 periodically performs reset-to-zero processing for preventing errors in the rotation positions of the stepping motors from accumulating by rotating the stepping motors to move the respective doors to the origin positions selected by the origin selection unit 65, and after performing the reset-to-zero processing, performs return processing for returning the respective doors to the positions thereof before the reset-to-zero processing.

More specifically, the control amount calculation unit 62 determines amounts of air to be blown through the vent blowout port 522, the foot blowout port 532, and the defroster blowout port 542 on the basis of the set temperature set by the passenger of the vehicle using the air-conditioning operation unit 70 and the information input from the respective sensors; determines an air blowing amount of the blower fan 45 required to blow the determined amounts of air; issues an instruction to rotate the blower fan 46 in accordance with the determined air blowing amount; and controls the operating condition of the compressor 30, a position of the intake door 43, and a position of the air mixing door 49.

Further, the control amount calculation unit 62 calculates the respective openings of the vent door 52, the foot door 53, and the defroster door 54 on the basis of the amounts of air to be blown through the vent blowout port 522, the foot blowout port 532, and the defroster blowout port 542, and transmits the calculated openings to the stepping motor driving control unit 64. The stepping motor driving control unit 64 issues instructions to the vent door driving unit 521, the foot door driving unit 531, and the defroster door driving unit 541, respectively, to modify the openings of the corresponding doors. Having received the instructions, the vent door driving unit 521, the foot door driving unit 531, and the defroster door driving unit 541 adjust the openings of the corresponding doors by rotating the stepping motors used to adjust the openings of the respective doors by a predetermined amount, and in so doing, realize a predetermined blowout condition. A rotation angle of the stepping motor is calculated by dividing a difference between the opening of the corresponding door, calculated by the control amount calculation unit 62, and an opening of the corresponding door stored in the door position storage unit 55 by a rotation angle of the stepping motor per pulse.

The air-conditioning display unit 80 may visually display the operating condition of the air-conditioning unit 40 instructed by the air-conditioning control unit 60 so that the operating condition is transmitted to the passenger of the vehicle.

When the vehicle air-conditioning apparatus 100 is operated in a manual mode, a blowout condition instructed by the passenger of the vehicle by operating the air-conditioning operation unit 70 is reproduced by rotating the respective doors. When the vehicle air-conditioning apparatus 100 is operated in an automatic mode, a blowout condition determined by the air-conditioning control unit 60 is reproduced by rotating the respective doors.

[Description of actions]

Next, actions of the reset-to-zero processing and return processing performed by the vehicle air-conditioning apparatus 100 according to this embodiment will be described on the basis of the diagram shown in Fig. 2 and the flowchart shown in Fig. 3, using the control of the vent door 52 as an example. For the sake of simplification, in Fig. 2, only the elements shown in Fig. 1 required to control the vent door 52 have been used. Further, to simplify the description, it is assumed that the vent door 52 rotates independently from the foot door 53 and the defroster door 54.

The positions of the vent door 52 correspond to five conditions shown in Fig. 2, namely DEF (defroster: a condition in which air is blown through the defroster blowout port 542), D/F (defroster/foot: a condition in which air is blown through the defroster blowout port 542 and the foot blowout port 532), FOOT (foot: a condition in which air is blown through the foot blowout port 532), B/L (bi-level: a condition in which air is blown through the vent blowout port 522 and the foot blowout port 532), and VENT (vent: a condition in which air is blown through the vent blowout port 522). The positions of the vent door 52 corresponding to these five conditions are determined in advance, and openings of the vent door 52 corresponding to the respective conditions or information indicating the respective conditions are stored in the door position storage unit 55.

First, in Step S1, a determination is made as to whether or not the vent door 52 has moved. This determination is performed to detect whether or not an instruction to modify the opening of the vent door 52 has been issued from the air-conditioning control unit 60 in relation to the vent door 52. When the vent door 52 has moved, a movement amount of the vent door 52 is transmitted to the door position storage unit 55. The door position storage unit 55 receives the movement amount of the vent door 52, and calculates a new position (opening) of the vent door 52 by adding the received movement amount of the vent door 52 to the position (opening) of the vent door 52 stored at that time. In Step S2, door position storage unit 55 stores the calculated new position (opening) of the vent door 52.

When it is determined in Step S1 that the vent door 52 has not moved, the processing advances to Step S3.

Next, in Step S3, the ignition signal detection unit 99 (which may be the power supply instruction unit) detects the condition of an ignition signal of the vehicle. When it is detected that the ignition signal has shifted from an ON condition to an OFF condition, the processing advances to Step S4.

When it is not detected that the ignition signal has shifted from the ON condition to the OFF condition, on the other hand, the processing advances to Step S1.

In Step S4, a determination is made as to whether or not the vehicle air-conditioning apparatus 100 is operating in the manual mode. When the vehicle air-conditioning apparatus 100 is operating in the manual mode, the processing advances to Step S5. When the vehicle air-conditioning apparatus 100 is operating in the automatic mode, the processing advances to Step S14.

In Step S5, a determination is made as to whether or not the blowout port of the vehicle air-conditioning apparatus 100 is in the VENT position or the B/L position. When it is determined that the blowout port is in the VENT position or the B/L position, the processing advances to Step S6. When it is determined that the blowout port is not in the VENT position or the B/L position, the processing advances to Step S15.

In Step S6, a single origin position is selected by an action of the origin selection unit 65. In this embodiment, when the blowout port is in the VENT position or the B/L position, the VENT position (a position contacting the vent door second rotation restricting unit 524 (which may be the stopper member)) on a side close to the vent door 52, from among the respective end portions of the rotation range of the vent door 52, is selected as the origin position, whereupon the processing advances to Step S7. In other words, a stopper member origin position (the VENT position) from among a plurality of stopper member positions is selected based on which of the plurality of stopper member positions is closer to a position or an angle of the movable member (the vent door 52) that has been calculated based at least in part on a command issued to the stepping motor.

In Step S7, an instruction to start the reset-to-zero processing is issued from the reset-to-zero and return processing control unit 66 to the stepping motor driving control unit 64. At this time, a command is issued to move the vent door 52 from the position of the vent door 52 stored in the door position storage unit 55 (which may be the movable member position storage unit) to the VENT position selected as the origin position. The stepping motor driving control unit 64 calculates a pulse number required to perform the reset-to-zero processing for moving the vent door 52 to the origin position by dividing an angle difference between the position of the vent door 52 stored in the door position storage unit 55 and the VENT position selected as the origin position by the rotation angle per pulse of the vent door driving unit 521 (which may be the stepping motor), and inputs at least the calculated pulse number into the vent door driving unit 521. The reason for inputting at least the calculated pulse number is that the position of the vent door 52 stored in the door position storage unit 55 may include an error, and therefore at least the calculated pulse number is input in consideration of the error to ensure that the vent door 52 is reliably reset to zero at the origin position.

In Step S8, a determination is made as to whether or not the reset-to-zero processing is complete. This determination is made by determining whether or not the pulse number determined in Step S7 has been input into the vent door driving unit 521. If the predetermined number of pulses has been input, the reset-to-zero processing is determined to be complete, and therefore the processing advances to Step S9. When the predetermined number of pulses has not been input, Step S8 is continued. When at least the predetermined number of pulses is input in Step S7, the vent door 52 contacts either the vent door second rotation restricting unit 524 in the VENT position selected as the origin position or the vent door first rotation restricting unit 523 in the DEF position. When further pulses are input, the vent door 52 is obstructed by the vent door second rotation restricting unit 524 or the vent door first rotation restricting unit 523 so as to be unable to rotate further. As a result, loss of synchronism occurs and the vent door 52 is maintained in the contact position.

When it is determined that the reset-to-zero processing is complete, the position of the vent door 52 stored in the door position storage unit 55 is read in Step S9, whereupon the processing advances to Step S10.

In Step S10, the position of the vent door 52 stored in the door position storage unit 55 is reset, whereupon the processing advances to Step S11.

In Step S11, an instruction to start the return processing is issued from the reset-to-zero and return processing control unit 66 to the stepping motor driving control unit 64. At this time, the stepping motor driving control unit 64 calculates a pulse number required to move the vent door 52 from the VENT position selected as the origin position to the position of the vent door 52 read in Step S9, and inputs the calculated pulse number into the vent door driving unit 521.

In Step S12, the position of the vent door 52 is stored in the door position storage unit 55 in accordance with the pulse number input into the vent door driving unit 521, whereupon the processing advances to Step S13.

In Step S13, a determination is made as to whether or not the return processing is complete. This determination is made by determining whether or not the pulse number calculated in Step S11 has been input into the vent door driving unit 521. If the predetermined number of pulses has been input, the return processing is determined to be complete, and the processing of Fig. 3 is terminated. When the predetermined number of pulses has not been input, on the other hand, the processing returns to Step S12.

When it is determined in Step S5 that the blowout port is not in the VENT position or the B/L position, or when a set temperature of the vehicle air-conditioning apparatus 100 takes a value on a hot side (for example, when the set temperature equals or exceeds a predetermined set temperature) in Step S14, the DEF position (a position contacting the vent door first rotation restricting unit 523 (which may be the stopper member)) on the side close to the vent door 52, from among the respective end portions of the rotation range of the vent door 52, is selected as the origin position by the action of the origin selection unit 65 in Step S15, whereupon the processing advances to Step S16. In other words, a stopper member origin position (the DEF position) from among a plurality of stopper member positions is selected based on which of the plurality of stopper member positions is closer to a position or an angle of the movable member (the vent door 52) that has been calculated based at least in part on a command issued to the stepping motor.

When the set temperature of the vehicle air-conditioning apparatus 100 does not take a value on the hot side (for example, when the set temperature does not equal or exceed the predetermined set temperature) in Step S14, the processing advances to Step S6.

In Step S16, an instruction to start the reset-to-zero processing is issued from the reset-to-zero and return processing control unit 66 to the stepping motor driving control unit 64. At this time, a command is issued to move the vent door 52 from the position of the vent door 52 stored in the door position storage unit 55 to the DEF position selected as the origin position. The stepping motor driving control unit 64 at this time calculates an angle difference between the position of the vent door 52 stored in the door position storage unit 55 and the DEF position selected as the origin position, and issues a command to input at least a number of pulses obtained by dividing the calculated angle difference by the rotation angle per pulse of the vent door driving unit 521, which may be a stepping motor, into the vent door driving unit 521.

In Step S17, a determination is made as to whether or not the reset-to-zero processing is complete. This determination is made by determining whether or not the pulse number determined in Step S16 has been input into the vent door driving unit 521. If the predetermined number of pulses has been input, the reset-to-zero processing is determined to be complete, and therefore the processing advances to Step S18. When the predetermined number of pulses has not been input, Step S17 is continued.

When the reset-to-zero processing is determined to be complete, the position of the vent door 52 stored in the door position storage unit 55 is read in Step S18, whereupon the processing advances to Step S19.

In Step S19, the position of the vent door 52 stored in the door position storage unit 55 is reset, whereupon the processing advances to Step S20.

In Step S20, an instruction to start the return processing is issued from the reset-to-zero and return processing control unit 66 to the stepping motor driving control unit 64. At this time, the stepping motor driving control unit 64 calculates a pulse number required to move the vent door 52 from the DEF position selected as the origin position to the position of the vent door 52 read in Step S18, and inputs the calculated pulse number into the vent door driving unit 521.

In Step S21, the position of the vent door 52 is stored in the door position storage unit 55 as required in accordance with the pulse number input into the vent door driving unit 521, whereupon the processing advances to Step S22.

In Step S22, a determination is made as to whether or not the return processing is complete. This determination is made by determining whether or not the pulse number calculated in Step S20 has been input into the vent door driving unit 521. If the predetermined number of pulses has been input, the return processing is determined to be complete, and the processing of Fig. 3 is terminated. When the predetermined number of pulses has not been input, on the other hand, the processing returns to Step S21.

As described above, with the reset-to-zero and return processing method for a stepping motor applied to the vehicle air-conditioning apparatus according to the first embodiment, the ignition signal detection unit 99 (which may be the power supply instruction unit) detects the condition of the ignition signal of the vehicle, and when it is detected that the ignition signal has shifted from the ON condition to the OFF condition, the origin selection unit 65 selects either a position contacting the vent door first rotation restricting unit 523 (which may be a stopper member) or a position contacting the vent door second rotation restricting unit 524 (which may be a stopper member) on the side close to the vent door 52 (movable member) as the origin position (which may be considered to be selecting a stopper member origin position from among a plurality of stopper member positions based on which of the plurality of stopper member positions is closer to a position or an angle of the movable member that has been calculated based at least in part on a command issued to the stepping motor). An instruction to execute the reset-to-zero processing is then issued from the reset-to-zero and return processing control unit 66 to the stepping motor driving control unit 64, whereupon the reset-to-zero processing is executed by having the stepping motor driving control unit 64 calculate the pulse number required to perform the reset-to-zero processing and input at least the calculated pulse number into the vent door driving unit 521 (which may be a stepping motor). When the reset-to-zero processing is complete, an instruction to execute the return processing is issued from the reset-to-zero and return processing control unit 66 to the stepping motor driving control unit 64, whereupon the return processing is executed by having the stepping motor driving control unit 64 calculate the pulse number required to perform the return processing on the basis of the position of the vent door 52 before the reset-to-zero processing, which is stored in the door position storage unit 55 (which may be the movable member position storage unit), and input the calculated pulse number into the vent door driving unit 521. As a result, the amount of time required for the reset-to-zero processing and the return processing can be shortened.

In the first embodiment, the control of the vent door 52 was described as an example, but the reset-to-zero and return processing may be performed similarly on the foot door 53 and the defroster door 54. Further, similar reset-to-zero and return processing can be applied to the intake door 43 and the air mixing door 49.

[Second Embodiment]

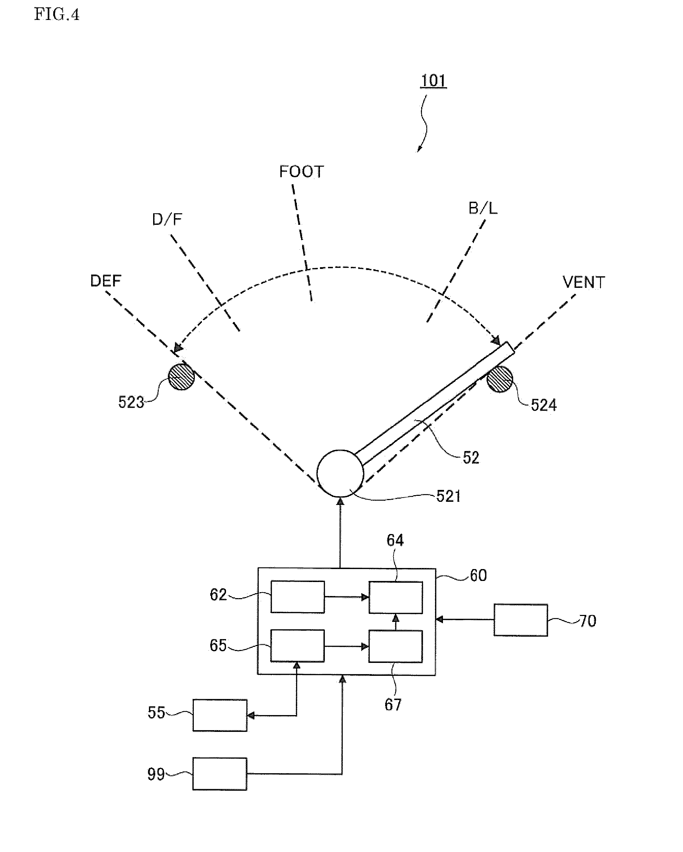

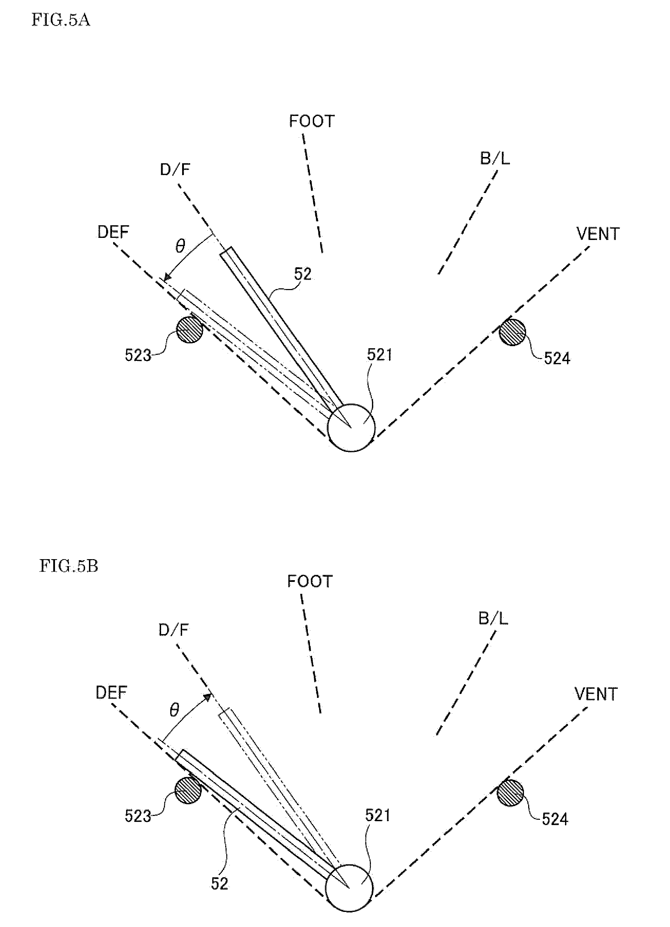

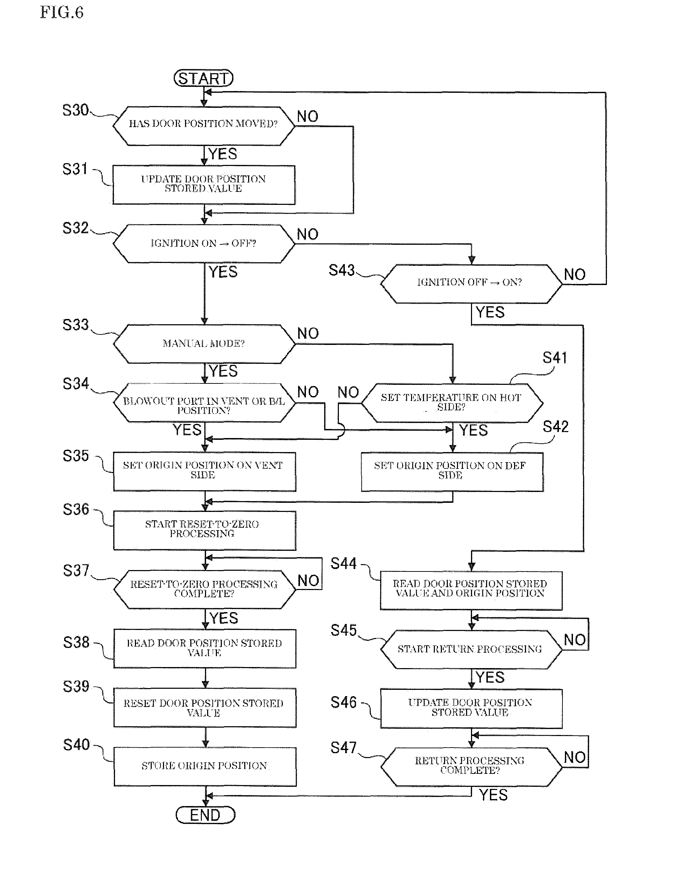

In a second embodiment of the present invention the vent door 52 of a vehicle air-conditioning apparatus is controlled. A particular feature of the second embodiment is that variation in the ON/OFF condition of the ignition signal of the vehicle is detected, whereupon the reset-to-zero processing is performed when the ignition is OFF and the return processing is performed when the ignition is ON. The second embodiment of the present invention will be described below using Figs. 4 and 5 and a flowchart in Fig. 6.

[Mechanical configuration]

A mechanical configuration of a vehicle air-conditioning apparatus 101 is similar to the configuration of the vehicle air-conditioning apparatus 100 described in the first embodiment, and therefore description thereof has been omitted. For simplicity, an operation to control the independently rotating vent door 52 will be described. Fig. 4 shows only elements required to control the vent door 52 according to the second embodiment.

[Control configuration]

The control configuration of the vehicle air-conditioning apparatus 101 is substantially idontical to the content described in the first embodiment, and therefore only differences will be described.

In this embodiment, when the ignition signal detection unit 99 (which may be the power supply instruction unit (power supply instructor)) detects the condition of the ignition signal of the vehicle and determines that the ignition signal has shifted from the ON condition to the OFF condition, a reset-to-zero and return processing control unit 67 issues an instruction to execute the reset-to-zero processing, whereby reset-to-zero processing shown in Fig. 5A is performed. When the ignition signal detection unit 99 determines that the ignition signal has shifted from the OFF condition to the ON condition, on the other hand, the reset-to-zero and return processing control unit 67 issues an instruction to execute the return processing, whereby return processing shown in Fig. 5B is performed.

[Description of actions]

Next, actions of the reset-to-zero processing and return processing performed by the vehicle air-conditioning apparatus 101 according to this embodiment will be described on the basis of the diagram shown in Fig. 4 and the flowchart shown in Fig. 6, taking the control of the vent door 52 as an example.

First, in Step S30, a determination is made as to whether or not the vent door 52 has moved. When the vent door 52 has moved, the movement amount of the vent door 52 is transmitted to the door position storage unit 55. The door position storage unit receives the movement amount of the vent door 52, and calculates a new position (opening) of the vent door 52 by adding the received movement amount of the vent door 52 to the position (opening) of the vent door 52 stored at that time. In Step S31, the door position storage unit stores the calculated new position (opening) of the vent door 52.

When it is determined in Step S30 that the vent door 52 has not moved, on the other hand, the processing advances to Step S32.

Next, in Step S32, the ignition signal detection unit 99 (which may be the power supply instruction unit) detects the condition of the ignition signal of the vehicle. When it is determined that the ignition signal has shifted from the ON condition to the OFF condition, the processing advances to Step S33.

When it is not determined that the ignition signal has shifted from the ON condition to the OFF condition, on the other hand, the processing advances to Step S43.

In Step S33, a determination is made as to whether or not the vehicle air-conditioning apparatus 101 is operating in the manual mode. When the vehicle air-conditioning apparatus 101 is operating in the manual mode, the processing advances to Step S34, and in other cases, the processing advances to Step S41.

In Step S34, a determination is made as to whether or not the blowout port of the vehicle air-conditioning apparatus 101 is in the VENT (vent) position or the B/L (bi-level) position. When it is determined that the blowout port is in the VENT position or the B/L position, the processing advances to Step S35, and when it is determined that the blowout port is not in the VENT position or the B/L position, the processing advances to Step S42. When the vent door 52 is in a condition shown in Fig. 5A, for example, the processing advances to Step S42.

In Step S35, a single origin position is selected by an action of the origin selection unit 65. More specifically, when the blowout port is in the VENT position or the B/L position, the VENT position (which may be a position contacting the vent door second rotation restricting unit 524 (which may be the stopper member)) is selected as the origin position, whereupon the processing advances to Step S36.

In Step S36, an instruction to start the reset-to-zero processing is issued from the reset-to-zero and return processing control unit 67 to the stepping motor driving control unit 64. At this time, a command is issued from the stepping motor driving control unit 64 to the vent door driving unit 521 to move the vent door 52 from the position of the vent door 52 stored in the door position storage unit 55 to the VENT position or the DEF position selected as the origin position. The stepping motor driving control unit 64 calculates a pulse number required to perform the reset-to-zero processing for moving the vent door 52 to the origin position by dividing an angle difference (which may be an angle difference θ in Fig. 5A) between the position of the vent door 52 stored in the door position storage unit 55 and the VENT position or the DEF position selected as the origin position by the rotation angle per pulse of the vent door driving unit 521 (which may be the stepping motor), and inputs at least the calculated pulse number into the vent door driving unit 521.

In Step S37, a determination is made as to whether or not the reset-to-zero processing is complete. This determination is made by determining whether or not the pulse number determined in Step S36 has been input into the vent door driving unit 521. If the predetermined number of pulses has been input, the reset-to-zero processing is determined to be complete, and therefore the processing advances to Step S38. When the predetermined number of pulses has not been input, Step S37 is continued.

When it is determined that the reset-to-zero processing is complete, the position of the vent door 52 stored in the door position storage unit 55 is read in Step S38, whereupon the processing advances to Step S39.

In Step S39, the position of the vent door 52 stored in the door position storage unit 55 is reset.

In Step S40, the origin position selected in Step S35 or Step S42 is stored in the door position storage unit 55, whereupon the processing of Fig. 6 is terminated.

When it is determined in Step S34 that the blowout port is not in the VENT position or the B/L position, or when a set temperature of the vehicle air-conditioning apparatus 101 takes a value on a preset hot side in Step S41, the DEF (defroster) position (which may be a position contacting the vent door first rotation restricting unit 523 (which may be the stopper member)) is selected as the origin position by the action of the origin selection unit 65 in Step S42, whereupon the processing advances to Step S36. When the vent door 52 is in the condition shown in Fig. 5A, for example, the DEF position is selected as the origin position, whereupon the processing advances to Step S36.

When the set temperature of the vehicle air-conditioning apparatus 101 takes a value on a preset cool side in Step S41, the processing advances to Step S35.

When it is determined that the ignition signal has shifted from the OFF condition to the ON condition in Step S43, the processing advances to Step S44.

When it is not determined that the ignition signal has shifted from the OFF condition to the ON condition, on the other hand, the processing returns to Step S30.

In Step S44, the position of the vent door 52 read from the door position storage unit 55 in Step S38 and the origin position stored in Step S40 are read, whereupon the processing advances to Step S45.

In Step S45, an instruction to start the return processing is issued from the reset-to-zero and return processing control unit 67 to the stepping motor driving control unit 64. At this time, the stepping motor driving control unit 64 calculates a pulse number required to move the vent door 52 from the VENT position or the DEF position selected as the origin position by an amount corresponding to an angle difference θ in Fig. 5B to the position of the vent door 52 read in Step S44, and inputs the calculated pulse number into the vent door driving unit 521 (which may be the stepping motor) from the stepping motor driving control unit 64.

In Step S46, the position of the vent door 52 is stored in the door position storage unit 55 as required in accordance with the pulse number input into the vent door driving unit 521, whereupon the processing advances to Step S47.

In Step S47, a determination is made as to whether or not the return processing is complete. This determination is made by determining whether or not the pulse number calculated in Step S45 has been input into the vent door driving unit 521. If the predetermined number of pulses has been input, the return processing is determined to be complete, and the processing of Fig. 6 is terminated. When the predetermined number of pulses has not been input, on the other hand, the return processing is continued until the predetermined number of pulses has been input, whereupon the processing of Fig. 6 is terminated.

As described above, with the reset-to-zero and return processing method for a stepping motor applied to the vehicle air-conditioning apparatus according to the second embodiment, when the ignition signal detection unit 99 (which mary be the power supply instruction unit (power supply instructor)) detects the condition of the ignition signal of the vehicle and determines that the ignition signal has shifted from the ON condition to the OFF condition, the origin selection unit 65 selects either a position contacting the vent door first rotation restricting unit 523 (which may be the stopper member) or a position contacting the vent door second rotation restricting unit 524 (which may be the stopper member) on the side close to the vent door 52 (which may be the movable member) as the origin position (that is, the selected position (origin position) that is closer to the vent door 52), whereupon an instruction to execute the reset-to-zero processing is issued from the reset-to-zero and return processing control unit 67 to the stepping motor driving control unit 64. Accordingly, the return-to-zero processing is executed by having the stepping motor driving control unit 64 calculate the pulse number required to perform the reset-to-zero processing and input the calculated number of pulses into the vent door driving unit 521 (which may be the stepping motor). When it is determined that the ignition signal has shifted from the OFF condition to the ON condition, on the other hand, an instruction to execute the return processing is issued from the reset-to-zero and return processing control unit 67 to the stepping motor driving control unit 64. Accordingly, the return processing is executed by having the stepping motor driving control unit 64 calculate the pulse number required to perform the return processing on the basis of the position of the vent door 52 before the reset-to-zero processing, which is stored in the door position storage unit 55 (which may be the movable member position storage unit), and input the calculated number of pulses into the vent door driving unit 521. As a result, respective periods during which the reset-to-zero processing and the return processing are performed can be completely separated, and therefore the time required for a single processing operation can be shortened even further in comparison with a case where the reset-to-zero processing and the return processing are performed consecutively.

Thus, according to this embodiment, to shorten a time needed to execute reset-to-zero and return processing on a stepping motor, one embodiment of the present invention may include a vent door first rotation restricting unit (which may be a stopper member) and a vent door second rotation restricting unit (which may be a stopper member) for restricting movement of a vent door (which may be a movable member) driven by a vent door driving unit (which may be a stepping motor) are provided in respective end portions of a movable range of the vent door. Reset-to-zero processing is performed using a position of a rotation restricting unit on a side close to the vent door, from among the vent door first rotation restricting unit and the vent door second rotation restricting unit, as an origin position. When the reset-to-zero processing is complete, return processing is performed to move the vent door to a door position stored in a door position storage unit (which may be a movable member position storage unit).

In the second embodiment, the control of the vent door 52 was described as an example, but a similar configuration may be applied to the controls of the foot door 53 and the defroster door 54. A similar configuration may also be applied to the intake door 43 and the air mixing door 49.

Embodiments of the present invention were described in detail above using the drawings, but these embodiments are merely examples of the present invention, and the present invention is not limited to the configurations of the embodiments. Design modifications and so on within a scope that does not depart from the spirit of the present invention are included therein. Further, when the respective embodiments include a plurality of configurations, for example, all possible combinations of these configurations are included even in the absence of specific description thereof. Moreover, when a plurality of embodiments and modified examples are illustrated, all possible combinations of configurations straddling the embodiments and modified examples are included even in the absence of specific description thereof. Furthermore, configurations depicted in the drawings are included even in the absence of specific description thereof. Moreover, when the term "and so on" is used, this indicates that equivalent elements are included. Further, when the terms "substantially", "approximately", and so on are used, this indicates that elements with a range or a degree of precision acceptable according to common sense are included.

The priority application Japanese Patent Application No. 2012-044104, filed February 29, 2012, is incorporated by reference herein.

## Claims

1. An operating method involving a stepping motor, wherein a movable member is movable in a movable range in response to a command issued to the stepping motor such that a given position of the movable member or a given angle of the movable member is changed, the method comprising:
selecting a stopper member origin position from among a plurality of stopper member positions based on which of the plurality of stopper member positions is closer to a first position or a first angle of the movable member that has been calculated based at least in part on a command issued to the stepping motor;
performing reset-to-zero processing by moving the movable member into a second position or a second angle relative to the stopper member origin position; and
performing return processing by moving the movable member from the second position or the second angle to the first position or the first angle that has been calculated based at least in part on the command issued to the stepping motor before performing said reset-to-zero processing.

2. The operating method according to claim 1, wherein the second position is a zero position against a stopper member at the stopper member origin position.

3. The operating method according to claim 1 or 2, wherein the reset-to-zero processing is performed when a main power supply of an apparatus installed with the stepping motor is interrupted and/or the return processing is performed when the main power supply is reintroduced after being interrupted.

4. The operating method according to any preceding claim, wherein stopper members at the plurality of stopper member positions are provided at respective end portions of the movable range of the movable member.

5. The operating method according to any preceding claim, wherein the movable member is a door for permitting airflow through a channel in a vehicle air-conditioning apparatus.

6. A processing apparatus for a stepping motor, comprising:
an origin selector configured to select an origin position from among a plurality of stopper member positions based on which of the plurality of stopper member positions is closer to a calculated position of a movable member; and
a reset-to-zero and return processing controller configured to perform reset-to-zero processing for moving the movable member to a zeroing position or a zeroing angle, and configured to perform return processing for moving the movable member from the zeroing position to a first position or a first angle that was determined or calculated before the reset-to-zero processing.

7. An apparatus for controlling a movable member, comprising:
a processing apparatus for a stepping motor according to claim 6,
a stepping motor driving controller configured to drive the stepping motor by issuing a command indicating a movement amount or a rotation amount of the movable member to the stepping motor; and
a movable member position storage unit configured to store the first position or the first angle of the movable member that has been calculated based at least in part on a command issued from the stepping motor driving controller,
wherein the origin selector is configured to select a stopper member origin position from among the plurality of stopper member positions based on which of the plurality of stopper member positions is closer to the first position or the first angle of the movable member that has been calculated based at least in part on the command issued from the stepping motor driving controller.

8. The apparatus for controlling the movable member according to claim 7, wherein the reset-to-zero and return processing controller is configured to control the stepping motor such that the movable member is moved into the zeroing position or the zeroing angle such that the movable member is in contact with a stopper member located at the stopper member origin position.

9. The apparatus for controlling the movable member according to claim 7 or 8, further comprising:
the stepping motor;
the movable member; and
stopper members at the plurality of stopper member positions.

10. The apparatus for controlling the movable member according to claim 9, wherein the stopper members at the plurality of stopper member positions are provided at respective end portions of a movement range or a rotation range of the movable member such that movement or rotation of the movable member is restricted.

11. The apparatus for controlling the movable member according to any of claims 7 to 10, further comprising a power supply instructor configured to introduce and interrupt a main power supply of an apparatus installed with said stepping motor.

12. The apparatus for controlling the movable member according to claim 11, wherein the reset-to-zero and return processing controller is configured to perform the reset-to-zero processing when the main power supply is interrupted, and/or the reset-to-zero and return processing controller is configured to perform the return processing when said main power supply is reintroduced after being interrupted.

13. The apparatus for controlling the movable member according to any of claims 7 to 12, wherein the apparatus is a vehicle air-conditioning apparatus that further comprises the stepping motor, the movable members, and the stopper members, and wherein the movable member is a door that permits airflow though a channel.

14. The apparatus for controlling the movable member according to claim 13, wherein the stopper members are parts of an inner wall surface of a mixing chamber, structures projecting from the inner wall surface, or a combination thereof.

15. The processing apparatus for a stepping motor according to claim 6, wherein:
the reset-to-zero and return processing controller is configured to periodically perform reset-to-zero processing;
at the zeroing position or zeroing angle the movable member is in contact with a stopper member at the origin position; and
the reset-to-zero and return processing controller is configured to perform reset-to-zero processing by issuing a command such that the stepping motor moves the movable member to the zeroing position.
